(19) Europäisches Patentamt
European Patent Office
Office européen des brevets

(11) **EP 3 121 717 A1**

(12) **EUROPEAN PATENT APPLICATION**

(43) Date of publication:
**25.01.2017 Bulletin 2017/04**

(51) Int Cl.:
***G06F 9/50*** *(2006.01)*

(21) Application number: **16180913.2**

(22) Date of filing: **22.07.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **23.07.2015 US 201514806817**

(71) Applicant: **Schneider Electric IT Corporation West Kingston, RI 02892 (US)**

(72) Inventor: **BARRETT, Enda Galway (IE)**

(74) Representative: **Hayden, Nicholas Mark Murgitroyd & Company Scotland House 165-169 Scotland Street Glasgow G5 8PL (GB)**

(54) **A SYSTEM TO PLACE VIRTUAL MACHINES ONTO SERVERS BASED UPON BACKUP RUNTIME CONSTRAINTS**

(57) Systems and methods are provided for the allocation of software applications to network nodes. In one embodiment, a method may employ a computer based system to access a list of software applications, determine characteristics of the software applications, and map software applications to network nodes. In another embodiment, a system utilizes characteristics from the software applications and characteristics from reserve power capacity of the network nodes based on the mapping. This information may be implemented using a supervising or distributed application configuration to allow or restrict the initiation of migration of the software applications correlated to the mappings.

FIG. 1

EP 3 121 717 A1

**Description**

BACKGROUND

Field of Invention

Embodiments of the present invention relate generally to methods and systems for managing software applications, and more specifically to a method and system for allocating a software application to network nodes based on various characteristics.

Discussion of Related Art

Stand alone computers as well as centralized data centers to house physical computers and supporting infrastructure have existed for many years. In either configuration it was not uncommon to maintain separate physical servers for the most critical of software applications. This configuration was largely employed for fault tolerance protection where a software application was so critical, no risk could be taken in running a second unique software application on the same hardware that may jeopardize the operational state of the server. While segregating critical software applications was robust from a fault tolerance perspective, it was not efficient from an economic resource use perspective, where many machines were underutilised, with respect to their resources.

With the advent of modem day server virtualization, this approach changed where several critical software applications could now share a single physical server confident that each co-located software application was insulated from the others running on the same physical computer. This approach however, brought new issues in the sharing of a single set of physical resources for all of the software applications that were to reside on that particular physical server.

However, as will be explained, the complexity of determining what physical resources are required for a given set of software applications is one that cannot be correctly approximated outside of the computing environment itself and determining how software applications may be distributed to network nodes given particular resource considerations is fundamental for maintaining robust operation for software applications.

SUMMARY

Aspects of the present invention relate generally to allocation of software applications to network nodes. Embodiments of the invention provide systems and methods for allocation of software applications to network nodes based on characteristics of the software applications and characteristics of the network nodes. At least one embodiment provides a system and a method that enables a software application operating on network nodes to initiate a migration to other network nodes based on characteristics of the reserve power capacity of the network nodes.

One aspect of this invention is directed toward a system and method for allocating a software application to network nodes that includes accessing, with a processor, a list of software applications configured to run on a network node, determining, with the processor, characteristics from the list of software applications, determining, with the processor, a reserve power capacity for each network node from a plurality of network nodes, and mapping, with the processor, software applications to network nodes derived by the software application characteristics and the network node reserve power capacity.

In the system and method, initiating a migration of the software application from one network node to a second network node may also occur. In the system and method, accessing a list, determining characteristics from the list, determining a reserve power capacity, and mapping software applications to network nodes may be performed on a single network node or a plurality of network nodes.

The system and method may also include the characteristics of at least one software application such as power consumption. In the system and method, the power consumption of at least one software application may be determined by direct measurement.

The system and method may also include characteristics of at least one software application such as process criticality.

The system and method may also include generating a mapping of at least one software application to network nodes calculated using an algorithm. In the method, the algorithm may be a metaheuristic or multi-criteria optimization algorithm.

The system and method may also include the mapping of one software application to network nodes that represents a group of software applications without specifically enumerating the individual software applications. The system and method may also include, the reserve power capacity of the network node is provided by one of a battery, generator, capacitor, or flywheel. In the system, a user interface coupled to the processor may display an interactive representation of a software application and network nodes.

Another aspect of the invention is directed towards a non-transitory computer readable medium comprising computer-executable instructions that when executed on a computer system, performs a method for allocation of a software application to network nodes, comprising, accessing a list of software applications configured to run on a network node, determining characteristics from the list of software applications, determining a reserve power capacity for each network node from a plurality of network nodes, and mapping software applications to network nodes derived by the software application characteristics and the network node reserve power capacity.

BRIEF DESCRIPTION OF THE DRAWINGS

The accompanying drawings are not intended to be drawn to scale. In the drawings, each identical or nearly identical component that is illustrated in various figures is represented by a line numeral. For purposes of clarity, not every component may be labeled in every drawing. In the drawings:

FIG. 1 is a cloud computing environment in which a system for allocation of a software application to network nodes in accordance with one embodiment of the invention is present;
FIG. 2 is a flow chart of a process for allocating a software application to a network node according to one embodiment of the invention;
FIG. 3 is a system for allocating a software application to a network node, utilizing a supervisory node, in accordance with one embodiment of the invention;
FIG. 4 is an illustration of one possible embodiment of a single network node;
FIG. 5 is a system for allocating a software application to a network node, utilizing a distributed system, in accordance with one embodiment of the invention;
FIG. 6 is a functional block diagram of a computer system that may be used in embodiments of the invention;
FIG. 7 is a functional block diagram of a storage system that may be used with the computer system of FIG. 6.

DETAILED DESCRIPTION

This invention is not limited in its application to the details of construction and the arrangement of components set forth in the following descriptions or illustrated by the drawings. The invention is capable of other embodiments and of being practiced or of being carried out in various ways. Also, the phraseology and terminology used herein is for the purpose of descriptions and should not be regarded as limiting. The use of "including," "comprising," "having," "containing," "involving," and variations herein, are meant to be open-ended, i.e. "including but not limited to."
Modem economics have driven critical physical configurations to maximize the number of computer applications to run on a single instance of computer hardware. To accomplish this increase in computational density, virtualization as a technology has led to a dramatic increase in the flexibility and utilization of existing computer hardware. By allocating the resources of a single physical computer into smaller Virtual Machines (VMs) to run their respective applications on the same physical host or network node, the density of computer applications for a single physical instance increased several fold.
A resulting constant challenge is the efficient provisioning of available resources from a physical computer, or network node to all the desired software applications to be operated on the physical host. These resources may include central processing unit (CPU), memory, hard disk, network, and other hardware resources. Consideration must also be taken for the infrastructure resources required to properly operate the physical host or network node, such that the mission critical software applications which reside on it are properly maintained or migrated to a physical host which can support them and allow for continuous and robust operation.

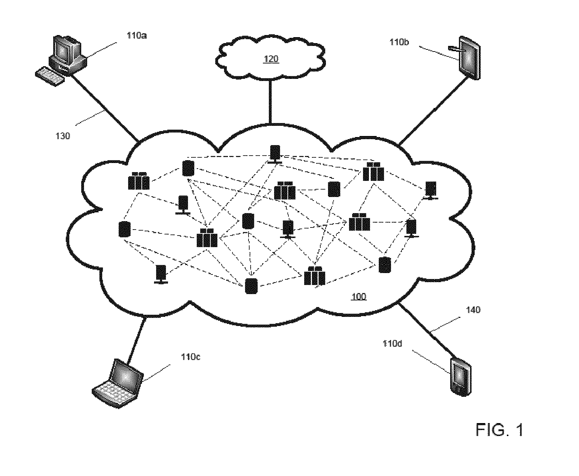

FIG. 1 is generally illustrative of a cloud computing environment 100. Within this cloud environment 100 comprises one or more computing nodes including, but not limited to, computer servers, disk storage, terminal servers, and appropriate infrastructure to support such equipment. One purpose of this environment may be to enter, store, manage, process, or output data in a remote environment rather than rely on locally accessible servers or personal computers. This infrastructure may generally include considerations for power, cooling, storage, network access, security, and device management. Devices and infrastructure within this environment 100 may be grouped physically or virtually in one or more configurations to accommodate, public, private, hybrid, or other network topologies specific to the need of the environment itself. Access to the cloud computing environment 100 may also be gained by a variety of devices capable of connecting to such an environment in either a wired 130 or wireless 140 connection manner. These wired 130 connection types may include, but are not limited to any physical cabling method such as category 5 cable, coaxial, fiber, or any other physical media to propagate electrical signals. Wireless 140 connections may include, but are not limited to personal area networks (PAN), local area networks (LAN), Wi-Fi, Bluetooth, cellular, global, or space based communication networks. Example devices capable of these communication methods include, but are not limited to, desktop computers or terminal servers 110a, personal digital assistants (PDA), tablet computers, or portable tablet devices 110b, laptop computers 110c, or cellular telephones and similar telecommunications equipment 110d. Further, access between the cloud environment 100 and other cloud environments 120 is possible where these other cloud environments are configured to connect with devices similar to cloud environments such as 100. It is well understood that these types of computing devices illustrated within 100, 110a-110d, and 120 and connection types 130 and 140 shown in FIG. 1 are intended to be illustrative only and that computing nodes and cloud computing environments can communicate with any type of computerized device over any type of network with addressable or direct connections.

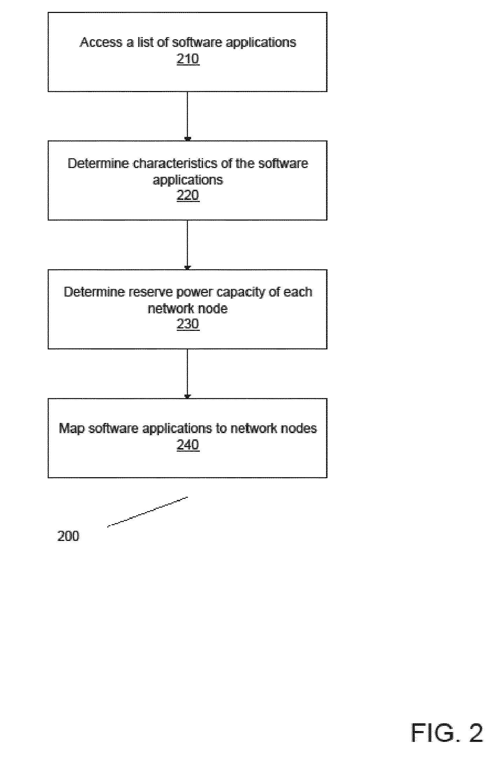

An example process of allocation of software applications to network nodes 200 is illustrated in FIG. 2. As an initial matter, listings of available software applications which may be available are initially identified 210 and accessed. If this listing 210 has not been created or as may be expected in a dynamic computer system, these applications may have changed with time; a list is initially generated, not merely accessed. In all cases, either by initial creation or access of an existing list of software applications 210 may define a list of such applications and may do so iteratively so as to keep an accurate list of software applications for use throughout the process 200.

Once a listing of the software applications is available 210, principles of the invention may determine the characteristics of the software applications 220 from the list of software applications 210. These software application characteristics 220 may include, but are not limited to, power consumption, priority, central processing unit (CPU) utilization, memory utilization, hard disk utilization, network access and utilization, as well as other hardware and computational resources present immediately or able to be derived or calculated over time. In this way an individual software application may be classified with regard to its characteristics. One or several such characteristics may be used to form other characteristics. An example may be the power usage and CPU usage over time for a particular software application to form yet another unique characteristic of the software application. In this way, a limitless number of characteristics may be formed regarding a given software application over time. It should be appreciated this characterization is not a one-time event, but is periodic in nature to maintain an accurate depiction of the characteristics of each of the software applications listed 210. While an initial generation of a list of software application characteristics 220 is required, subsequent refining may cause these characteristics to be changed. Each separate software application listed 210 will retain their own unique characteristics 220.

Determining these individual software application characteristics prior to instantiation can be a highly speculative effort. Determining software application characteristics 220 once an application is installed may include direct monitoring from available commercial tools such as virtual machine management assistants. Particular software application monitoring clients may offer metering based on resource usage and provides an Application Program Interface (API) which may be used programmatically to obtain particular characteristics of any software application and use in the calculation of others.

One principle of the invention of determining software application characteristics may be power consumption by direct measurement. For each instantiated software application or VM it is possible to query actual power consumption and use this data to determine power consumption estimates based on the data returned from the software application over time.

Principles of the invention also show multiple forecasting methods may be used to make predictions based on the values returned and create an incremental learning solution where one embodiment reduces the regret or residual error between initial estimates and the observed values once the software application or VM is deployed on the physical host.

This principle of the invention continuously improves on its estimates to yield ever more accurate power characteristics. Predictions based directly on measured historical data from a client such as virtual machine management assistants may select a certain user configurable time frame and sample period. In a simple single feature linear regression model the hypothesis $h\theta_x$ takes the form:

$$h_\theta x = \theta_0 + \theta_1 x$$

with the cost function for the corresponding parameters $\theta_0$ & $\theta_1$ being:

$$J(\theta_0, \theta_1) = \frac{1}{2m} \sum_{i=1}^{m} (h_\theta x^i - y^i)^2$$

One goal may be to minimise the cost function of $J(\theta_0, \theta_1)$, which may be achieved using methods such as gradient descent by computing the partial derivative each time and slowly moving towards a minimum for both $\theta_0$, $\theta_1$.

$$\theta_0 = \frac{\partial}{\partial \theta_0} J(\theta_0, \theta_1)$$

$$\theta_1 = \frac{\partial}{\partial \theta_1} J(\theta_0, \theta_1)$$

A resulting regression curve for multiple features may be plotted, which may also be referred to as a multiple linear regression or multivariate linear regression.

$$\theta_j := \theta_j - \alpha \frac{1}{2m} \sum_{i=1}^{m} (h_\theta x^{(i)} - y^{(i)}) \, x_j^{(i)}$$

Each parameter $\theta_j$ may be adjusted to ensure that the best possible fit to the data. A set of all features X = $\{X_1, X_2 \dots X_n\}$ may consist of the available monitoring information made possible through the various monitoring technology client. For each of these features at a particular time $t$ a corresponding value $Y$ is associated which is the power consumed by the VM at that particular instance.

Principles of the invention demonstrate this process allows one to predict the current power consumption of a software application based on past observations of power consumption from one network node to another. It should be noted other factors may also be considered, such as the type and characteristics of physical server that the software application is being deployed on.

To allow individual network nodes to remain operational after a power event, reserve power capacity may exist on some physical nodes. Principles of the invention demonstrate the reserve power capacity of each network node 230 may be determined through programmatic means with an interface device to the reserve power capacity source or by manual user entry. Examples of reserve power capacity include, but are not limited to, batteries, generators, capacitors, or flywheels. Uninterruptable Power Supplies (UPS) may provide substantial protection from power events as well as provide ample reserve power capacity for a network node which may be queried via programmatic methods to determine the available reserve power. One embodiment illustrates a listing of reserve power capability is determined for each reserve power capacity of each network node 230. It should be appreciated that any available reserve power type may be used with any network node and no requirement exists for similar types of reserve power devices nor capacities in any network nodes nor that such a reserve power capacity exist of any type on every network node.

Once a list of available software applications 210 is available, the characteristics of each software application is determined 220, and reserve power capacity of the available network nodes is determined 230, a mapping of software applications to network nodes 240 occurs. This mapping as with other processes in the allocation of software applications to network nodes 200 may be iterative in nature or a onetime event. This mapping process 240 may be run at, for example, start-up of a network node, software application, or any other event, including but not limited to user specified, periodic timing or dynamic reallocation of resources within a software application or network node. A constant re-examination of the network nodes and the associated resource use is helpful to maintain the holistic health of the system.

One embodiment of the mapping process 240 dynamically allocates the software applications to the network nodes to assure the robust operation of the characterized software applications. In another embodiment, software applications characterized as the most critical may be mapped to the network nodes able to support their operation the longest time due to the associated reserve power resource should a power event occur. Criticality may be determined in a variety of ways, including, but not limited to, programmatically via any available virtual machine management assistants or via user input.

Principles of the invention may be capable of placing software applications onto physical hosts to maintain an enumerated runtime guarantee specified by a user. In another embodiment, the mapping process utilizes algorithms to form a learning system and refine subsequent mappings to optimise the allocations of the software applications based on the iterative characteristics learned from the allocation process 200.

Principles of the invention regarding the mapping process 240 may be initiated when a calculation is made if a software application or VM is violating the available runtime of the reserve power capacity of the network node or host machine it currently resides on. In one embodiment such a configuration may be a periodic health check of the network nodes or physical hosts and software applications or VMs in the current configuration. Periodic validation may be needed due to the uncertainty and dynamics of software application power consumption where a once healthy software application and network node pairing may violate a runtime requirement if in one example, the activity on the software application increases substantially thereby causing a power increase of the software application, and a reduction of reserve power capacity. While this is one illustrative example, the situations that may cause a change in characteristics are large in number and may give rise to various embodiments of the invention.

Principles of the invention regarding the mapping process 240 may also include use of an algorithm or user input to create such a mapping. This mapping as with other processes in the allocation of software applications to network nodes 200 may be iterative in nature or a onetime event. This mapping process 240 may be run at, for example, start-up of a network node, software application, or any other event, including but not limited to user specified, periodic timing or dynamic reallocation of resources within a software application or network node. A constant re-examination of the network nodes and the associated resource use is helpful to maintain the holistic health of the system. Various algorithms have demonstrated efficacy in the past when operating on these difficult problems and have been shown to provide good results.

Generally, for very large and difficult problems such as the complexity of determining what physical resources may be used for a given set of software applications, metaheuristic or other optimization algorithms may be employed to find, generate, or select a partial search algorithm to provide a reasonable solution to a sample space which is unable to be completely sampled. As such, the objective function may be dynamic, multi objective or multi criteria. Associated methods may be population based or trajectory based and any final solution may comprise an approach derived from Nature Inspired computing.

Such Nature Inspired methods may include, but are not limited to, Genetic Algorithms, Genetic programming, Particle Swarm Optimization, Ant Colony Optimization, Scatter search, Tabu search, Stochastic local search, Variable neighborhood search, Greedy Randomized Adaptive Search Procedure, Cuckoo search. Such a problem may also be further transformed into discrete functions, rendering feasible the application of combinatorial optimization methods, where linear programming, mathematical programming and an abundance of techniques from shortest path algorithms to tree search and matching algorithms may be used. It should be appreciated use of these methods may allow a learning system to be created such that solutions initially created will be evolved over time adjusting to the dynamics of the environment.

As an example, principles of the invention appreciate the use of a Genetic Algorithm (GA) as one such algorithm which has demonstrated efficacy with the types of problems one embodiment is intended to remedy. A GA is a multistage process where a solution to a problem is "evolved" through selection processes based by those proposed by Darwinian evolution. A basis for the algorithm is once a single good solution is found the solution is evolved from that point. Generally classified as a stochastic search and optimisation procedure, such techniques have also shown tendencies towards local minima. Processes such as mutation are used to ensure greater genetic diversity in the population and to encourage greater exploration of the search space, to avoid local optima or minima.

A first step may involve creating a population for mapping software applications onto network nodes. To create an initial population, each individual schedule (*I*) in the population may be generated through a two-step process. Available software applications or virtualisation software is queried to determine what suitable physical hosts are available within the cluster or physical topology to host the software applications or VMs. Next, a network node may be chosen at random provided it does not violate the backup runtime specified by the software application creator where the runtime of the software application is within the reserve power capacity of the network node. In order to apply evolutionary processes to the mapping it may be easier to represent a given mapping as a bit string.

Principles of the invention show the predicted power consumption of each software application or VM calculated using multiple linear regressions and an estimated runtime for the reserve power capacity at that predicted load. This forms the *"fitness"* of each individual solution or chromosome. This is evaluated using a fitness function given by the following equations

$$F_{runtime}(I) = \frac{r(I)}{R} \qquad\qquad F_{migration}(I) = \frac{m(I)}{M}$$

For a fitness evaluation, a multi-criteria solution may be adopted. Principles of the invention show this adoption may both ensure the maximum available runtime to software applications or VMs based on their characteristics and may minimise the amount of software application migrations between physical hosts. The equations listed may consider a runtime fitness "*R*" and migration fitness "*M*" which may be a flexible value and configurable. Migration may be a part of the combined fitness function, as migration may be resource intensive between network nodes depending on the topology of the network. In one embodiment, if two mappings have been generated by the GA, but one involves fewer or an optimal number of migrations than the other, the one with the fewer migrations may take precedence. An overall fitness function is normalised to the following equation:

$$h_\theta x = \theta_0 + \theta_1 x$$

*F(i)* Represents the normalised fitness of an individual solution in the population. $f_{max}$ Represents the fitness of the best individual in the population and $f_{min}$. μ, A scalar value ensures that each individual solution has some value.

Individual mapping solutions are ranked according to their fitness score with respect to the overall population. Once ranked, a selection process is initiated where there are a number of possible options for selection. Generally schemes such as tournament based or roulette wheel are commonly used to select individuals for breeding purposes. In this embodiment we may use roulette wheel but several others are possible.

To create the next generation "G+1", two parents are chosen using the selection process. For roulette wheel selection, the parents are probabilistically chosen based on their fitness, meaning that those with the greatest fitness are more likely to get selected more frequently and more of their offspring will end up in the next generation. A concept known as *"elitism"* may sometimes be applied at the beginning of the selection process where the best individuals are moved straight into the next generation to avoid the evolutionary processes completely. This may be done primarily to ensure that optimal solutions are not lost during an evolutionary phase. Once two parents have been selected, the operations of *"crossover"* and *"mutation"* are applied probabilistically. Crossover generally involves picking a point in the chromosome of one parent.

A single point in both parents' is selected where two children are created by combining portions of the parents bit string. Feasibility of the child schedules is evaluated and the individual schedule is discarded if not feasible. Next, mutation is applied probabilistically. Whilst crossover and mutation are applied probabilistically both probabilities often vary, with crossover usually having a much higher probability of occurring over mutation. If too high a value of mutation is selected, a high degree of randomness will exist within the population and the quality of the solutions will be reduced. However if no mutation occurs, mapping solutions may reside in local optima.

Principles of the invention allow once these mapping processes have completed, another generation of individual solutions, generation "G+1" is created and the process repeats again. A GA may terminate either after a number of runs have completed or if another stopping condition is satisfied. Examples of this may be, but are not limited to number of generational iterations, user input, or fitness level.

Once the evolutionary process has completed, principles of the invention allow the best solution, which may be determined by the solution with the highest fitness score, may be selected and executed by the Mapping Module 410. Such a mapping from network nodes or physical hosts to software applications or VMs and where migrations are required, will contain the information about which software applications or VMs may be placed on which network nodes or physical hosts.

Once the mapping is executed by the Mapping Module 410 one embodiment may iterate the software applications to network nodes process 200 and update the software application characteristics over time. It should be appreciated such characteristics may vary with the activity of the software application or VM and to produce accurate predictions of the characteristics machine learning techniques such as multivariate regression combined with gradient descent may be used. This is an adaptive estimate and may change as more and more samples of experience are presented to it. It may also change depending on the hardware changes made to the underlying network nodes or software changes to the applications or VM.

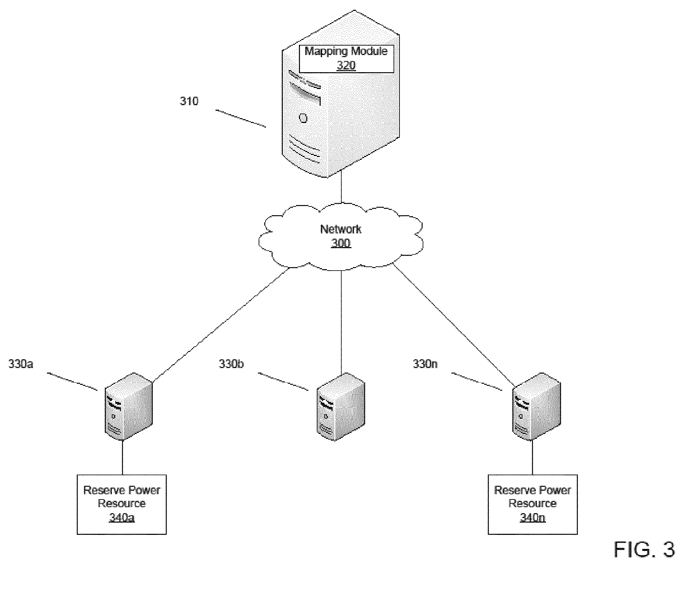

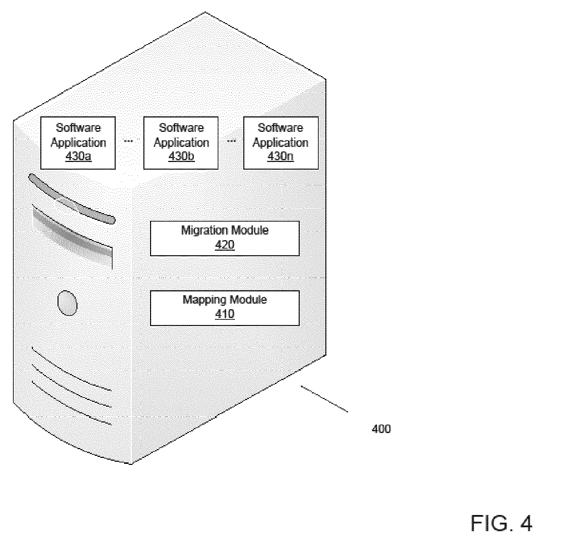

Several topologies exist where a method and system of allocation of software to network nodes 200 may exist. FIG. 3 illustrates one embodiment where the allocation of software application to network nodes resides in a supervisory node topology. In this topology a single supervisory node 310 exists which contains the components shown in FIG 4. An embodiment may be implemented using a general purpose computing system 400. This computing system may contain an embodiment of a Mapping Module 410 to perform the method of allocating software applications from FIG. 2 as well as a migration module 420, responsible for the actual migration of the software applications as determined by the mapping module 410. This computing system enables the creation and placement of various computer applications onto the physical computing system itself. Included on the one or more such computer applications may be put onto a single physical machine where the limiting factor is the resources available on the physical machine itself. Such example software applications are shown at 430a, 430b, and 430n understanding the plurality of software applications is limited only by the available resources on the computing system at 400. It should be appreciated that a plurality of software applications may be mapped and subsequently migrated from one network node to another network node as a group with reference to a single name or logical function as defined, for example, but not limited to, programmatically or by a user. In this way a plurality of software applications may be migrated with characteristics such as, but not limited to, function, size, criticality, user preferences, or based on any other available or derived information. Enumeration of each and every discreet software application or network node may not be necessary in some embodiments of the invention.

In one embodiment the software applications at 430a - 430n may be what are called in industry "Virtual Machines" (VMs). As illustrated, a VM may be instantiated onto the physical host 400. This may be accomplished by using a system image which contains a snapshot of a complete computer system, capturing the operating system, installed applications and any other files and configurations that may be present when the image was captured. In essence this snapshot image once captured in a file represents the entire state of the computer system. Once placed in a file, the entire image can be copied and used to create additional VMs identical to the one that the image was taken from. A typical virtualization configuration is illustrated in FIG. 4 where a plurality of distinct VMs 430a - 430n is deployed on the single host server machine 400. Each VM is co-located with the others but they may not have knowledge over the other. From the VM's perspective the environment operates just like a physical machine. A principal enabling component which allows multi tenancy on these physical hosts is a piece of technology known as a virtual machine monitor or hypervisor. When installed on the physical host 400, the hypervisor component is capable of segmenting the host computer resources into smaller virtual machines residing on that same host. This hypervisor component is responsible for ensuring that each specific VM instance has access to the required amount of system resources (CPU cycles, RAM and disk) without negatively impacting any other. Such a hypervisor component may contain migration capabilities or act as part of a Migration Module 420.

Regarding the supervisory topology in FIG. 3, in addition to the supervisory node 310 which contains the mapping module 320 responsible for the software allocation process 200, several monitored network nodes may also exist 330a, 330b, and 330n. As such information regarding the list of software application 210, characteristics of the software applications 220, reserve power capacity of each network node 230, and mapping of software applications to network nodes 240 will occur on the supervisory node 310, but have access through the network 300 to the monitored nodes 330a, 330b, and 330n as well as their reserve power resources 340a - 340n. Each of these nodes represents a general purpose computer system which may each contain software applications or VMs. Additionally; each monitored network node may have a reserve power capacity 340a-340n associated with it which is intended to provide the physical host additional reserve power, should it become necessary due to a failure of the infrastructure supporting the physical network nodes. Examples of reserve power capacity include, but are not limited to, batteries, generators, capacitors, or flywheels. Each of these monitored network nodes 340a - 340n and supervisory node 310 are connected via a network 300 that may communicate between devices.

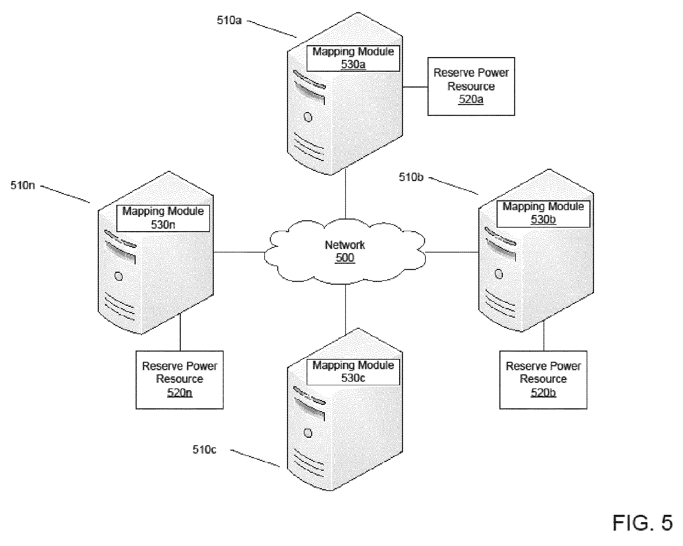

Another embodiment illustrated by FIG. 5 is where the allocation of software application to network nodes process 200 may be performed in a distributed topology. In this embodiment one or more systems for allocating software applications to network nodes is present as described in FIG. 4. These individual network nodes are represented at 510a - 510n, indicating a plurality of nodes may be present. Each of these nodes is connected to a network at 500 to facilitate intra-device communication.

In the distributed topology in FIG. 5, each individual node 510a - 510n contains the mapping module 530a-530n responsible for the software allocation process 200. In this embodiment no distinction exists between monitored and supervisory nodes. As such information regarding the list of software application 210, characteristics of the software applications 220, reserve power capacity of each network node 230, and mapping of software applications to network nodes 240 will occur on each node, and have access through the network 500 to each of the other nodes 510a-510n as well as their reserve power resources 520a - 520n, should the monitored node have such a resource. Each of these nodes represents a general purpose computer system which may each contain software applications as illustrated generally in FIG. 4. Additionally, each monitored network node may have a reserve power capacity 520a-520n associated with it which is intended to provide the physical host additional reserve power, should it become necessary due to a failure of the infrastructure supporting the physical network nodes. Examples of reserve power capacity include, but are not limited to, batteries, generators, capacitors, or flywheels. Each of these network nodes 510a - 510n are connected via a network 500 that may communicate between devices.

Another principle of the invention is demonstrated by the distributed topology of FIG. 5, where the software applications residing on a plurality of network nodes 510a- 510n with associated reserve power capacity 520a-520n, and through the software allocation process 200 are mapped such that software applications determined to retain the most helpful characteristics are migrated to the network nodes with a reserve power capacity to maintain robust system operation in the event of an infrastructure failure, for one example, a power outage to the network nodes. It should be appreciated this characterization is not a one-time event, but is periodic in nature to maintain an accurate depiction of the characteristics of each of the software applications listed 210. While an initial generation of a list of software application characteristics 220 is required, subsequent refining may cause these characteristics to be changed. Each separate software application listed 210 will retain their own unique characteristics 220.

One principle of the invention allows for parallel learning between the monitored nodes 510a - 510n. Parallel learning refers to a suite of methods where autonomous learning systems collaborate with each other to solve a shared problem using some knowledge sharing mechanism to generate better results in a shorter time span than single agent learners could. A parallel learning system which is an illustrated embodiment of FIG. 5, has proven efficacy in this regard when compared to single agent learning systems, which is an illustrated embodiment of FIG. 3. It should be appreciated knowledge built up working in one environment may be transferred to another to speed up learning in that other environment.

Principles of the invention demonstrate generally that parallel methods take the form of one of two possible approaches. A first approach involves breaking down the problem into smaller sub problems where each Mapping Module 530a - 530n solves a sub task. A master Mapping Module with access to all agents' information, which may be called "perfect information" aggregates the results from the sub processes and makes a decision. This master Mapping Module may exist on any Mapping Module 530a - 530n.

Another principle of the invention is to allow each Mapping Module 530a - 530n to independently operate on the problem and make decisions in a global context whilst sharing information. In this way each sub Mapping Module 530a - 530n may learn about their environment such as the cluster of physical machines or network nodes and reserve power under their control and share their information with others in the same data center or even in other locations. In this way one Mapping Module may gain useful information that may be available from other Mapping Modules already running physically or virtually nearby. This allows agents to share their experiences of operating on similar types of problems in parallel to benefit each other and may reduce exploration which may create additional and optimal solutions.

Principles of the invention demonstrate the parallel learning method described may not share the mappings from software applications or VMs to network nodes or hosts resulting from the evolutionary processes between topologically distinct Mapping Modules, as they may be optimized specific to the cluster which the mapping module is responsible for managing. However, data produced from individual Mapping Modules may be transferable between other Mapping Modules, as software applications or VMs may be started up on similar hardware with the same or similar system images. Thus it is possible that each will perform approximately equivalently.

It should be appreciated one of the most important considerations with any parallel method is how to integrate the data from the learning experiences of one network node with that of all others. In order to ensure that the best mappings are created for the machines under control a weighted function may be used where a higher proportion of the power estimate is based on observations over other mapping agents in the topological vicinity. The reason for this is the specific applications and processes running on the software applications or VMs may result in different characteristics over time. Therefore it may be more reliable to weight a local estimate of a particular estimation over that of a neighboring mapping agent to allow higher precision over time. Parallel learning in this manner may dramatically reduce the search space and exploration time where substantial learning may be passed to a mapping agent allowing a mapping agent to inherit a very large base of knowledge.

Various embodiments according to the invention may be implemented on one or more computer systems illustrated generally in FIG. 1,3,4, or 5. For example a single network node 400 may be implemented in a single computer system or in multiple computer systems. These computer systems may contain a non-transitory computer readable medium which comprises computer-executable instructions that when executed on such a computer system performs the method for allocation of a software application to network nodes. Principles of the invention demonstrate a user interface may be used to display static or interactive representations of various embodiments of the invention.

These computer systems may be, for example, general-purpose computers such as those based on Intel PENTIUM-type processor, Motorola PowerPC, Sun UltraSPARC, Hewlett-Packard PA-RISC processors, or any other type of processor.

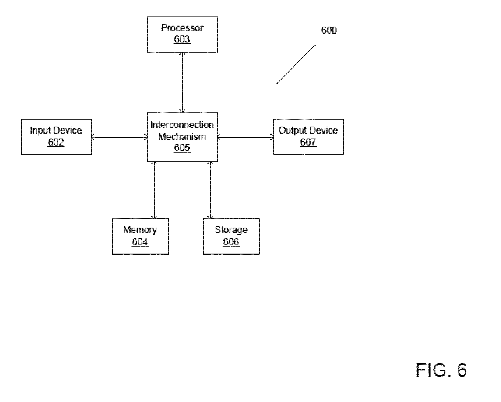

For example, various embodiments of the invention may be implemented as specialized software executing in a general-purpose computer system 600 such as that shown in FIG. 6. The computer system 600 may include a processor 603 connected to one or more memory devices 604, such as a disk drive, memory, or other device for storing data. Memory 604 is typically used for storing programs and data during operation of the computer system 600. The computer system 600 may also include a storage system 606 that provides additional storage capacity. Components of computer system 600 may be coupled by an interconnection mechanism 605, which may include one or more busses (e.g., between components that are integrated within the same machine) and/or a network (e.g., between components that reside on separate discrete machines). The interconnection mechanism 605 enables communications (e.g., data, instructions) to be exchanged between system components of system 600.

Computer system 600 also includes one or more input devices 602, for example, a keyboard, mouse, trackball, microphone, touch screen, and one or more output devices 607, for example, a printing device, display screen, speaker. In addition, computer system 600 may contain one or more interfaces (not shown) that connect computer system 600 to a communication network (in addition or as an alternative to the interconnection mechanism 605).

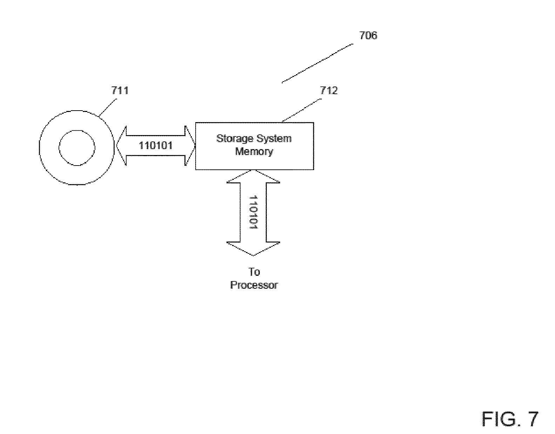

The storage system 606, shown in greater detail in FIG. 7, typically includes a computer readable and writeable nonvolatile recording medium 711 in which signals are stored that define a program to be executed by the processor or information stored on or in the medium 711 to be processed by the program to perform one or more functions associated with embodiments described herein. The medium may, for example, be a disk or flash memory. Typically, in operation, the processor causes data to be read from the nonvolatile recording medium 711 into another memory 712 that allows for faster access to the information by the processor than does the medium 711. This memory 712 is typically a volatile, random access memory such as a dynamic random access memory (DRAM) or static memory (SRAM). It may be located in storage system 706, as shown, or in memory system 604. The processor 603 generally manipulates the data within the integrated circuit memory 604, 712 and then copies the data to the medium 711 after processing is completed. A variety of mechanisms are known for managing data movement between the medium 711 and the integrated circuit memory element 604, 712, and the invention is not limited thereto. The invention is not limited to a particular memory system 604 or storage system 606.

The computer system may include specially-programmed, special-purpose hardware, for example, an application-specific integrated circuit (ASIC). Aspects of the invention may be implemented in software, hardware or firmware, or any combination thereof Further, such methods, acts, systems, system elements and components thereof may be implemented as part of the computer system described above or as an independent component.

Although computer system 600 is shown by way of example as one type of computer system upon which various aspects of the invention may be practiced, it should be appreciated that aspects of the invention are not limited to being implemented on the computer system as shown in FIG. 6. Various aspects of the invention may be practiced on one or more computers having a different architecture or components shown in FIG. 6. Further, where functions or processes of embodiments of the invention are described herein (or in the claims) as being performed on a processor or controller, such description is intended to include systems that use more than one processor or controller to perform the functions.

Computer system 600 may be a general-purpose computer system that is programmable using a high-level computer programming language. Computer system 600 may be also implemented using specially programmed, special purpose hardware. In computer system 600, processor 603 is typically a commercially available processor such as the well-known Pentium class processor available from the Intel Corporation. Many other processors are available. Such a processor usually executes an operating system which may be, for example, the Windows 95, Windows 98, Windows NT, Windows 2000 (Windows ME) or Windows XP or Vista operating systems available from the Microsoft Corporation, MAC OS System X operating system available from Apple Computer, the Solaris operating system available from Sun Microsystems, or UNIX operating systems available from various sources. Many other operating systems may be used.

The processor and operating system together define a computer platform for which application programs in high-level programming languages are written. It should be understood that embodiments of the invention are not limited to a particular computer system platform, processor, operating system, or network. Also, it should be apparent to those skilled in the art that the present invention is not limited to a specific programming language or computer system. Further, it should be appreciated that other appropriate programming languages and other appropriate computer systems could also be used.

One or more portions of the computer system may be distributed across one or more computer systems coupled to a communications network. For example, as discussed above, a computer system that determines available power capacity may be located remotely from a system manager. These computer systems also may be general-purpose computer systems. For example, various aspects of the invention may be distributed among one or more computer systems configured to provide a service (e.g., servers) to one or more client computers, or to perform an overall task as part of a distributed system. For example, various aspects of the invention may be performed on a client-server or multi-tier system that includes components distributed among one or more server systems that perform various functions according to various embodiments of the invention. These components may be executable, intermediate (e.g., IL) or interpreted (e.g., Java) code which communicate over a communication network (e.g., the Internet) using a communication protocol (e.g., TCP/IP). For example, one or more database servers may be used to store device data, such as expected power draw, that is used in designing layouts associated with embodiments of the present invention.

It should be appreciated that the invention is not limited to executing on any particular system or group of systems. Also, it should be appreciated that the invention is not limited to any particular distributed architecture, network, or communication protocol.

Various embodiments of the present invention may be programmed using an object-oriented programming language, such as SmallTalk, Java, C++, Ada, or C# (C-Sharp). Other object-oriented programming languages may also be used. Alternatively, functional, scripting, and/or logical programming languages may be used. Various aspects of the invention may be implemented in a non-programmed environment (e.g., documents created in HTML, XML or other format that, when viewed in a window of a browser program render aspects of a graphical-user interface (GUI) or perform other functions). Various aspects of the invention may be implemented as programmed or non-programmed elements, or any combination thereof.

Embodiments of a systems and methods described above are generally described for use in relatively large data centers having numerous equipment racks; however, embodiments of the invention may also be used with smaller data centers and with facilities other than data centers. Some embodiments may also be a very small number of computers distributed geographically so as to not resemble a particular architecture.

In embodiments of the present invention discussed above, results of analyses are described as being provided in real-time. As understood by those skilled in the art, the use of the term real-time is not meant to suggest that the results are available immediately, but rather, are available quickly giving a designer the ability to try a number of different designs over a short period of time, such as a matter of minutes.

Having thus described several aspects of at least one embodiment of this invention, it is to be appreciated various alterations, modifications, and improvements will readily occur to those skilled in the art. Such alterations, modifications, and improvements are intended to be part of this disclosure, and are intended to be within the scope of the invention. Accordingly, the foregoing description and drawings are by way of example only.

**Claims**

1.  A method for allocating a software application to network nodes, comprising:

    accessing, with a processor, a list of software applications configured to run on a network node;
    determining, with the processor, characteristics from the list of software applications;
    determining, with the processor, a reserve power capacity for each network node from a plurality of network nodes; and
    mapping, with the processor, software applications to network nodes based on the software application characteristics and the network node reserve power capacity.

2.  The method of claim 1, further comprising initiating a migration of the software application from one network node to a second network node.

3.  The method of claim 1 or 2, wherein the accessing a list, determining characteristics from the list, determining a reserve power capacity, and mapping software applications to network nodes is performed on a single network node.

4.  The method of claim 1 or 2, wherein the accessing a list, determining characteristics from the list, determining a reserve power capacity, and mapping software applications to network nodes is performed on a plurality of network nodes.

5.  The method of any preceding claim, wherein the characteristics of at least one software application includes one of power consumption and process criticality.

6.  The method of any preceding claim, wherein the mapping includes correlating a software application to a network node based on one of a metaheuristic algorithm and a multi-criteria optimization algorithm.

7.  A system for allocating a software application to network nodes, comprising:

    a processor configured to:

    access a list of software applications configured to run on a network node;
    determine characteristics from the list of software applications;
    determine a reserve power capacity for each network node from a plurality of network nodes; and
    mapping software applications to network nodes derived by the software application characteristics and the network node reserve power capacity.

8.  The system of claim 7, further comprising initiating a migration of the software application from one network node to a second network node.

9.  The system of claim 7 or 8, wherein the processor is further configured to access a list, determine characteristics from the list, determine a reserve power capacity, and map software applications to network nodes is performed on a single network node.

10. The system of claim 7 or 8, wherein the processor is further configured to access a list, determine characteristics from the list, determine a reserve power capacity, and map software applications to network nodes is performed on a plurality of network nodes.

11. The system of any of claims 7 to 10, further comprising a user interface coupled to the processor to display an interactive representation of a software application and network nodes.

12. The system of any of claims 7 to 11, wherein the processor is further configured that the characteristics of at least one software application is at least one of power consumption and process criticality.

**13.** The system of any of claims 7 to 12, wherein the processor is further configured that the mapping includes correlating a software application to a network node based on one of a metaheuristic algorithm and a multi-criteria optimization algorithm.

**14.** The system of any of claims 7 to 13, wherein the processor is further configured to the mapping of one software application to network nodes that represents a group of software applications without specifically enumerating the individual software applications.

**15.** The system of any of claims 7 to 14, wherein the processor is further configured that the reserve power capacity of the network node is provided by one of a battery, generator, capacitor, or flywheel.

110a

120

110b

130

100

140

110d

110c

FIG. 1

Access a list of software applications
210

Determine characteristics of the software
applications
220

Determine reserve power capacity of each
network node
230

Map software applications to network nodes
240

200

FIG. 2

Mapping Module
320

310

Network
300

330a

330b

330n

Reserve Power
Resource
340a

Reserve Power
Resource
340n

FIG. 3

Software Application 430a ··· Software Application 430b ··· Software Application 430n

Migration Module 420

Mapping Module 410

400

FIG. 4

510a

Mapping Module
530a

Reserve Power
Resource
520a

510n

Mapping Module
530n

Network
500

510b

Mapping Module
530b

Reserve Power
Resource
520n

Mapping Module
530c

Reserve Power
Resource
520b

510c

FIG. 5

FIG. 6

706

711

712

110101

Storage System
Memory

110101

To
Processor

FIG. 7

Europäisches
Patentamt

European
Patent Office

Office européen
des brevets

# EUROPEAN SEARCH REPORT

Application Number

EP 16 18 0913

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/337832 A1 (ADOGLA EDEN GRAIL [US]) 13 November 2014 (2014-11-13) * paragraph [0014] - paragraph [0034] * ----- | 1-15 | INV. G06F9/50 |
| X | US 2011/282982 A1 (JAIN NAVENDU [US]) 17 November 2011 (2011-11-17) * paragraph [0003] * * paragraph [0005] * * paragraph [0021] * * paragraph [0022] * * paragraph [0028] - paragraph [0029] * * paragraph [0032] * * paragraph [0040] * * paragraph [0128] * ----- | 1-15 | |
| X | US 2010/211669 A1 (DALGAS MIKKEL [DK] ET AL) 19 August 2010 (2010-08-19) * paragraph [0107] * * paragraph [0108] * * paragraph [0120] * ----- | 1-15 | |

TECHNICAL FIELDS
SEARCHED (IPC)

G06F

The present search report has been drawn up for all claims

| Place of search | Date of completion of the search | Examiner |
|---|---|---|
| The Hague | 5 December 2016 | Carciofi, Andrea |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 18 0913

This annex lists the patent family members relating to the patent documents cited in  the above-mentioned European search report.
The members are as contained in the European Patent Office EDP file on
The European Patent Office is in no way liable for these particulars which are merely given for the purpose of information.

05-12-2016

| Patent document cited in search report | | | Publication date | Patent family member(s) | | | Publication date |
|---|---|---|---|---|---|---|---|
| US 2014337832 | A1 | | 13-11-2014 | NONE | | | |
| US 2011282982 | A1 | | 17-11-2011 | NONE | | | |
| US 2010211669 | A1 | | 19-08-2010 | AU | 2010214029 | A1 | 01-09-2011 |
| | | | | CA | 2752613 | A1 | 19-08-2010 |
| | | | | CN | 102395955 | A | 28-03-2012 |
| | | | | EP | 2396726 | A1 | 21-12-2011 |
| | | | | US | 2010211669 | A1 | 19-08-2010 |
| | | | | WO | 2010093515 | A1 | 19-08-2010 |

EPO FORM P0459

For more details about this annex : see Official Journal of the European Patent Office, No. 12/82